Europäisches Patentamt

European Patent Office

Office européen des brevets

(11) Publication number: 0 312 396 A2

# EUROPEAN PATENT APPLICATION

(21) Application number: 88309676.0

(51) Int. Cl.⁴: B 64 F 1/26

(22) Date of filing: 14.10.88

(30) Priority: 15.10.87 JP 259955/87

(43) Date of publication of application:
19.04.89 Bulletin 89/16

(84) Designated Contracting States: DE FR GB

(71) Applicant: Bridgestone Corporation
10-1, Kyobashi 1-Chome Chuo-Ku
Tokyo 104 (JP)

(72) Inventor: Takayama, Tamotsu
896-4, Iiizumi Odawara City
Kanagawa Pref. (JP)

Aoki, Hiroshi 303, Moa Kooto Totsuka
462-1, Kamiyabe-Cho Totsuka-Ku
Yokohama City Kanagawa Pref. (JP)

Murase, Masanori
C4-205,BS Apartments 4-4,Ogawahigashi-Cho, 3-Chome
Kodaira City Tokyo (JP)

Tomita, Naotaka
F305, Sayamadai Heights 1354-7, Irumagawa
Sayama City Saitama Pref. (JP)

Kondo, Yoshikazu
19-7, Sengoku 2-Chome
Bunkyo-Ku Tokyo (JP)

Isobe, Toshiyuki 4C-2, BS Apartments
827, Kashio-Cho Totsuka-ku
Yokohama City Kanagawa Pref. (JP)

Iida, Kazuyoshi 3-202, BS Apartments
710, Kamiyabe-Cho Totsuka-Ku
Yokohama City Kanagawa Pref. (JP)

(74) Representative: Whalley, Kevin et al
MARKS & CLERK 57/60 Lincoln's Inn Fields
London WC2A 3LS (GB)

(54) Movable soundproof apparatus.

(57) A movable soundproof apparatus is disclosed, comprising means for transporting a chassis (12), a foldable soundproof element panel (14) supported on the chassis (12) and actuators (34, 38) arrange on the chassis for operating the foldable panel between a folded position and an erected position. The apparatus adapted for carrying a soundproof element panel (14) to the vicinity of a sound source and setting it in an operation position relative to the sound source to effectively reduce the level of noise from the sound source.

FIG. 1

## Description

### MOVABLE SOUNDPROOF APPARATUS

The invention relates to a movable soundproof apparatus adapted for carrying a soundproof element panel to the vicinity of a sound source and setting it in an operation position relative to the sound source to effectively reduce the level of noise from the sound source.

Hitherto, in order to reduce the level of noise from the sound source it has been generally used soundproof walls which are fixed in positions spaced from the sound source.

It can be theoretically understood that the shorter such a soundproof wall is spaced from the sound source, the larger the soundproof effect can be obtained by a low soundproof wall.

However, such a fixed soundproof wall is often inevitably positioned far away from the sound source owing to its locational conditions, as a result a high soundproof wall is generally required.

Particularly, in cases of moving sound sources such as air-crafts, automobiles or the like, the soundproof walls should be extended over the extent of movement of the moving sound source since the position of the sound source is not specified, accordingly high soundproof walls are arranged away from the moving sound source.

The present invention is invented in view of the disadvantages of the prior art mentioned above. An object of the invention is to provide a movable soundproof apparatus which can freely approach a sound source and attain a large sound reducing effect by a low construction.

According to the present invention, a movable soundproof apparatus comprises means for transporting a chassis, a foldable soundproof element panel supported on the chassis and actuators arrange on the chassis for operating the foldable panel between a folded position and an erected position and is arranged such as to moved to the vicinity of a sound source and operated by means of the actuator to erect the panel at a position for soundproof.

An assembly of the transporting means and chassis may be, for example a trailer type truck.

In a preferable embodiment according to the invention, a wind pressure detector is provided on the panel and a controller is arranged such as to automatically fold the panel when the wind pressure increases beyond a predetermined level owing to a sound source such as an exhaust from a jet engine or the natural phenomenon, the soundproof element panel is simultaneously automatically folded to prevent the apparatus from turning over.

In a further preferable embodiment according to the invention, the soundproof element panel is consisted of both a sound absorbing material and a sound insulating material to attain a superior soundproof effect.

For a better understanding of the invention, reference is taken to the accompanying drawings, in which:

Fig. 1 is a perspective view of a movable soundproof apparatus in a folded movable position of a soundproof element panel according to an embodiment of the present invention;

Fig. 2 is a similar perspective view of the movable soundproof apparatus of Fig. 1, but in an erected setting position of the soundproof element panel;

Fig. 3 is a schematic elevational view of a mechanism for operating the foldable soundproof element panel from its folded movable position shown in Fig. 1 to its elected setting position shown in Fig. 2;

Fig. 4 is a partly broken perspective view of an embodiment of a soundproof element showing a cross-section thereof;

Fig. 5 is a block diagram of a hydraulic control system for actuating the mechanism shown in Fig. 3;

Fig. 6 is a perspective view of another embodiment of a soundproof element with a part broken away for showing a cross-section thereof; and

Fig. 7 is a schematic cross-sectional view illustrating function of the soundproof element shown in Fig. 6.

The present invention will be embodically described with reference to the drawings.

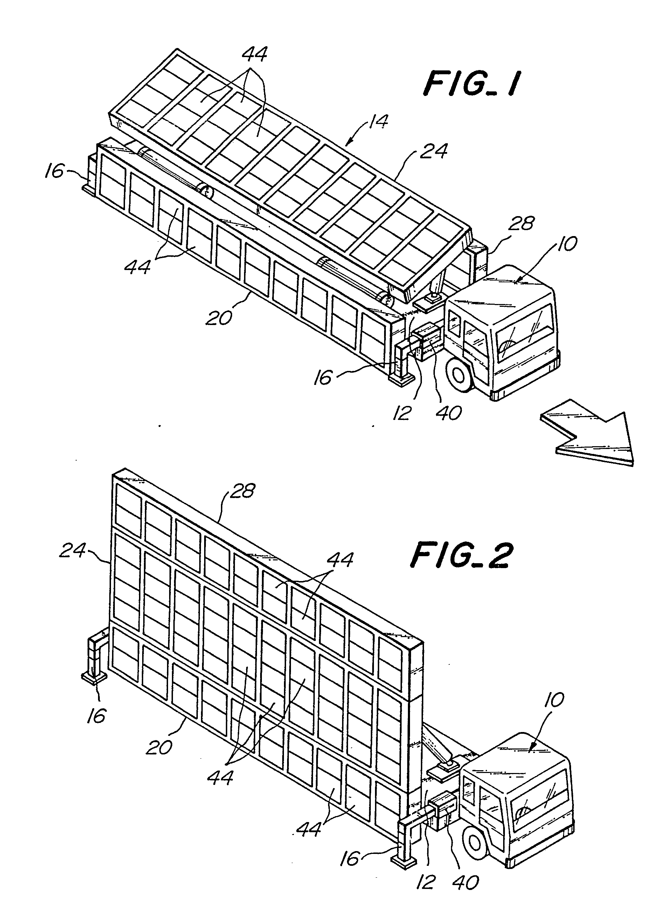

Referring to Figs. 1-3 illustrating an embodiment of the invention, a movable soundproof apparatus utilizes a truck 10 including a chassis 12 consisted of a trailer, a frame or the like of the truck.

The chassis carries a foldable soundproof element panel 14 and is provided with four extensible outriggers 16 at four corners of the chassis 12, respectively.

The chassis 12 has four wheels 18 with tires, two of which are at each of the opposite sides of the chassis so as to freely transport the soundproof element panel 14 by driving the truck 10.

The soundproof element panel 1 is composed of a lower stage panel part 20 which is fixed to the chassis 12 at its one side, a middle stage panel part 24 which is rotatably pivoted to the chassis 12 at a pivot point 22 such as to be folded on the chassis and an upper stage panel part 28 which is rotatably pivoted to the middle stage panel part 24 at a pivot point such as to be folded in the opposite side of the chassis.

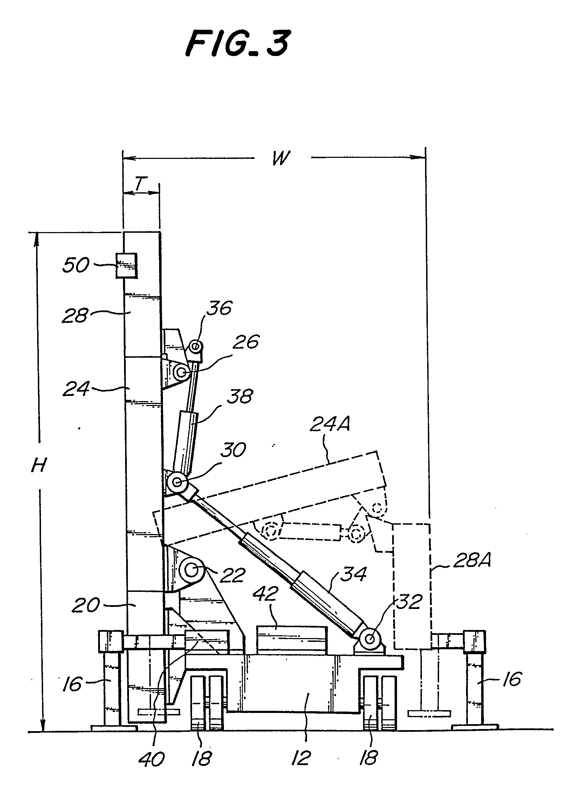

The middle stage panel part 24 is actuated between an erected position shown by a solid line in Fig. 3 and a folded position shown by a broken line 24A by means of a hydraulic cylinder 34 which is connected between a pivot pin 30 on the panel part 24 and a pivot pin 32 on the chassis 12.

The upper stage panel part 28 is rotatably actuated relative to the middle stage panel part 24 by means of a hydraulic cylinder 38 which is connected between a pivot pin 36 on the upper stage panel part and a pivot pin 30 on the middle panel part 24.

Accordingly, the upper stage panel 28 may be driven from an erected position shown by a solid line to a folded position shown by a broken line 28A by actuating for example in a direction of retraction of the hydraulic cylinders 34 and 38.

While, when the hydraulic cylinders 34 and 38 are actuated in a direction of extension as shown by a solid line, the middle stage panel part 24 and the upper stage panel part 28 are lifted on the lower stage panel part 20 and driven to the erected position to form a vertical wall by the soundproof element panel 14.

Thus, the present invention provide a movable soundproof apparatus comprising means 10 for transporting the chassis 12, a foldable soundproof element panel 14 supported on the chassis 12 and actuators 34 and 38 arranged on the chassis 12 for operating the foldable panel 14 between a folded position and an erected position and is arranged such as to be moved to the vicinity of a sound source and operated by means of the actuators 34, 38 to erect the panel 14, thereby to form a vertically extended soundproof wall.

When the soundproof element panel 14 is elected after transported to the vicinity of a sound source, firstly each of the outriggers 16 is outwardly extended along a respective outrigger guide 40 as shown by a solid line in Figs. 2 and 3 to contact the ground with a lower end shoe of each outrigger, thereby setting the movable soundproof apparatus in the desired location in a manner such as to prevent the apparatus from turning over.

In the embodiment shown in the drawings, four outriggers 16 are arranged at the front and rear end positions in the opposite sides of the chassis 12, but six or more outriggers may be arranged by additionally providing two or more outriggers at intermediate positions between the front and rear end positions, if necessary.

The movable soundproof apparatus further comprises a hydraulic unit 42 mounted on the chassis 12 for supplying hydraulic oil under pressure to the hydraulic cylinders 34, 38 and the outriggers 16, as shown in Fig. 3.

Referring to Figs. 1 and 2, each of the lower stage panel part 20, middle stage panel part 24 and upper stage panel part 28 includes a plurality of soundproof elements 44 which are horizontally and vertically arranged in the form of a matrix.

Actual dimensions of various portions of the movable soundproof apparatus as mentioned above will be described by referring the embodiment shown in Fig. 3. The apparatus has a width of about 4,000 mm at the folded movable condition of the soundproof element panel 14 which has a height of 7,000 mm at the erected position and a thickness of about 500 mm.

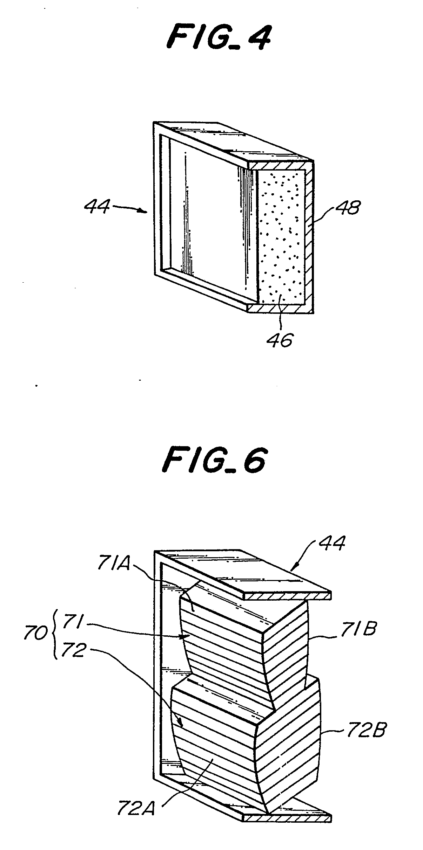

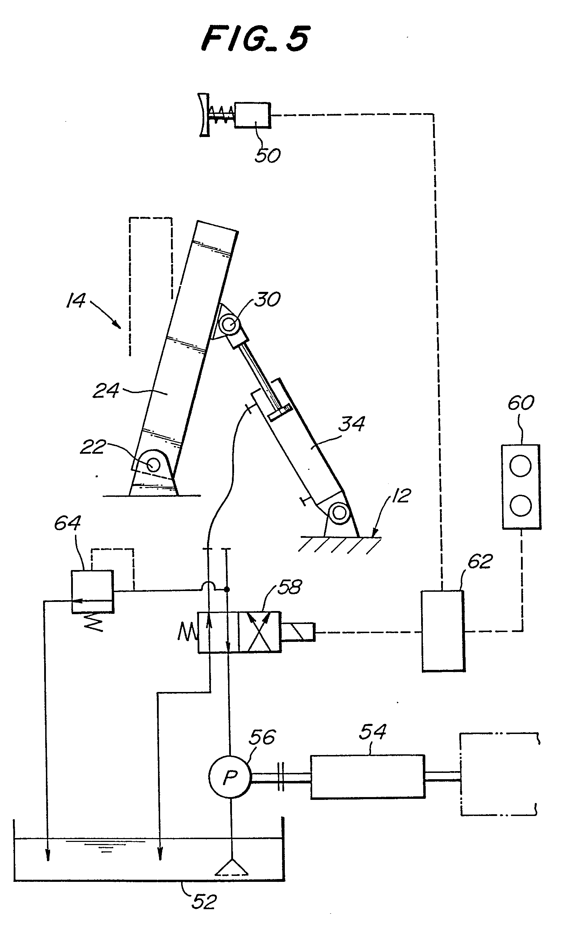

Fig. 4 shows a construction of the soundproof element 44 which is composed of a frame 48 made of a sound insulating material and a sound absorbing material 46 such as glass wool or foam aluminum fixed in the incident side of the frame.

Referring again to Fig. 3, the movable soundproof apparatus includes a wind pressure detector 50 which may be secured to the incident surface of the upper stage panel part 28 of the soundproof element panel 14 and is arranged such that when the wind pressure is increased beyond a predetermined level owing to a sound source such as an exhaust from a jet engine or the natural phenomenon such as typhoon, a gust of wind and the like, the soundproof element panel is simultaneously automatically folded to prevent an accident such as a violent fall of the apparatus from occurring.

Fig. 5 shows a block diagram of a hydraulic control system for the above mentioned movable soundproof apparatus.

Referring to Fig.5, the hydraulic oil in a hydraulic oil reservoir 52 is pressurized by means of a hydraulic pump 56 which is driven by an engine of the truck 10 and is supplied to the hydraulic cylinders 34 and 38 via a hydraulic directional control valve 58 (cf. Fig. 3).

When an operating switch 60 is then switched on, the hydraulic directional control valve 58 is shifted by a controller 62 to direct the hydraulic oil under pressure which is pressurized by the pump 56 to the extension sides of the hydraulic cylinders 34 and 38, thereby to erect the soundproof element panel 14 to the erected position (cf. Fig. 2).

It should be noted that each of the outriggers 16 is actuated by hydraulic oil under pressure to seat its lower end on the ground and to set the chassis 12 in a stable condition supported by the outriggers 16 in stead of the wheel 18 before the soundproof element panel 14 is erected.

An excess of the hydraulic oil supplied via the hydraulic directional control valve 58 is returned to the oil reservoir 52 through a constant hydraulic pressure holding valve 64 such as a relief valve for relieving abnormal hydraulic pressure.

When a wind pressure which exceeds a predetermined level owing to a sound source or a natural phenomenon acts on the erected soundproof element panel 14, the wind pressure detector 50 detects the exceeded wind pressure and an output signal from the detector is transferred to the controller 62 to simultaneously shift the hydraulic directional control valve 58, whereby the hydraulic cylinders 34 and 38 are actuated in a direction of retraction to quickly and automatically fold the soundproof element panel. Thus, the movable soundproof apparatus is prevented from turning over owing to the exceeded wind pressure.

When the soundproof apparatus according to the invention is used for reducing the level of sound propagating from a sound source, particularly a moving sound source such as an air-craft or the like, upon stop of the moving sound source, the movable soundproof apparatus with the folded soundproof element panel 14 (cf. Fig. 1) is rushed to the vicinity of the stopped sound source.

The movable soundproof apparatus is stopped as near as possible to the sound source and a parking brake is applied under an engine driving condition.

The hydraulic pump is driven by the engine and the outriggers are extended by hydraulic oil under pressure from the pump to set the movable soundproof apparatus in a stable condition on the ground.

Then, the hydraulic oil is supplied to the hydraulic cylinders 34 and 38 to erect the soundproof element panel 14 to a vertically erected position.

In order to ready for an emergency folding operation on occasion of abnormal wind pressure owing to the sound source or the natural phenomenon, the engine 54 is continuously driven to keep the hydraulic pressure even after the soundproof element panel has been elected.

On termination of the soundproof operation, the soundproof element panel 14 is folded and then the outrigger 16 is retracted to bring the soundproof apparatus to a movable condition. Lastly, the soundproof apparatus is transported to a hanger by the transporting means such as a truck.

The soundproof element 44 of the soundproof element panel 14 may be constructed in the form of a sound lens of a hollow construction adapted for reducing the level of sound by interference of sound waves in stead of the above mentioned soundproof element composed of the sound absorbing material 46 and the sound insulating material 48.

Fig. 6 is a partly broken perspective view of a soundproof element 44 constructed by a sound lens 70.

Referring to Fig. 6, the sound lens 70 used for soundproof element 44 is composed of a first passage group 71 and a second passage group 72, each of which is consisted of a plurality of slit shaped sloped passages. The sound lens 70 is not an insulation wall construction made of the insulating material 48 (cf. Fig. 4), but is a hollow construction wherein the sound waves can freely pass through the sloped passages.

In the sound lens 70 shown in Fig. 6, the open surfaces 71A and 72A at the left side of the first and second passage group 71 and 72 are sound wave incident surfaces positioned at the sound source side and the open surfaces 71B and 72B at the right side of the passage group are sound waves radiation surfaces.

In such a sound lens, there is provided a difference in the propagation distance from the sound source to the radiation surface of the sound lens between sound waves of a first group which pass through passages of the first passage group 71 and sound waves of a second group which pass through passages of the second passage group 72. As the result, the sound waves of the first and second groups have a difference of phase which causes an interference phenomenon. This interference phenomenon is utilized to cancel the sound pressure level of sounds each other which are radiated from the sound lens 70, thereby to attain the necessary soundproof effect.

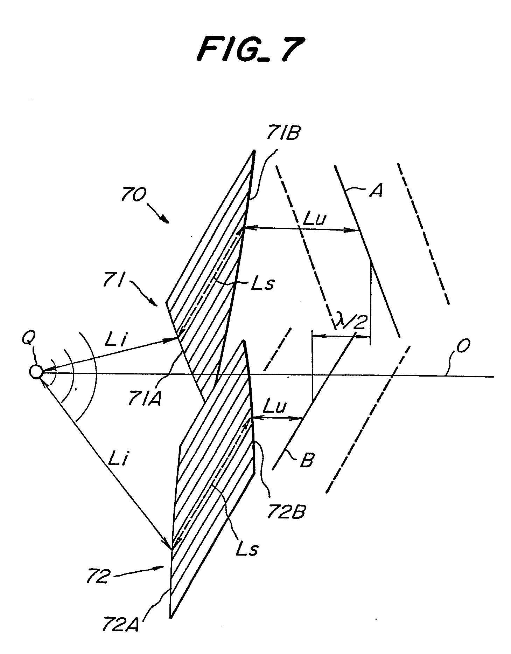

Fig. 7 shows the soundproof effect obtained by the soundproof element consisting of the sound lens shown in Fig. 6.

Referring to Fig. 7, the sound lens 70 is composed of upper and lower hollow bodies 71 and 72 having hollow passages divided to upper and lower passage groups. The sound lens is arranged such that sound waves pass through each passage from the incident surface 71A and 72A of the hollow bodies and radiate from the radiation surface 71B and 72B at the opposite side.

The length of each passage of the upper passage group 71 is determined such that a sum of a distance "Li" from a sound source Q to the inlet of the passage, the length "Ls" of the passage and a distance "Lu" from the outlet of the passage to an imaginary flat plane in front of the outlet of the passage is a constant "La", while the length of each passage of the lower passage group 72 is determined such as to equal to said constant length "La" plus or minus a half length $\lambda/2$ of a frequency of a sound to be reduced.

By determining the length "Ls" of each passage as mentioned above, the resulting wave emitted from the outlet after passing through the passages of the upper passage group becomes a plane wave "A" and the resultant wave emitted from the outlet after passing through each passage becomes a plane wave "B" which is shifted from the plane wave "A" by a half wavelength $\lambda/2$.

It is understood that the sound waves radiated from the sound source "Q" pass through the hollow passages of two divided groups to form plane "A" and "B" which are parallel or incline to the center axis "O" of the hollow bodies 71, 72 and shifted by a half wavelength $\lambda/2$ each other.

The foldable soundproof element panel 14 is composed of panel portions 20, 24, 28 each of which is formed of a plurality of soundproof elements 44 consisted of the sound lens 70 as mentioned above by referring to Figs. 6 and 7.

The soundproof element 44 consisted of the sound lens 70 as shown in Figs. 6 and 7 can reduce noise propagated from the sound source and relief the wind pressure applied to the soundproof element panel since the wind can pass through the hollow passage of the passage groups 781, 72 of the soundproof element 44.

Accordingly, use of the soundproof element 44 as shown in Figs. 6 and 7 is much advantageous in strength, weight and cost of the apparatus than use of the soundproof element 44 composed of a sound absorbing material 46 and a sound insulating material 48.

It is appearance from the above that the soundproof element 44 of the foldable soundproof element panel formed by the sound lens 70 of sound wave pass-through type also attain the similar soundproof effect as that of the soundproof element 44 composed of the sound absorbing material 46 and the sound insulating material 48 as shown in Fig. 4.

## Claims

1. A movable soundproof apparatus comprising means (10) for transporting a chassis (12), a foldable soundproof element panel (14) supported on the chassis (12) and actuators (34, 38) arranged on the chassis for operating the foldable panel (14) between a folded position and an erected position such as to transport the chassis to the vicinity of a sound source and operate the foldable soundproof element panel by means of the actuator (34, 38) to erect the panel (14) at a position for soundproofing.

2. An apparatus claimed in claim 1, further comprising a wind pressure detector (50) and being arranged such as to automatically fold the panel when the wind pressure increases beyond a predetermined wind pressure level.

3. An apparatus claimed in either of claims 1 or 2, wherein the soundproof element panel is composed of a sound absorbing material (46) and a sound insulating material (48).

4. An apparatus claimed in either of claims 1 or 2, wherein the soundproof element panel (14) comprises sound lenses (70).

*FIG_1*

*FIG_2*

# FIG. 3

## FIG_4

44 →

48

46

## FIG_6

44

71A

70 { 71

72

71B

72B

72A

# FIG. 5

# FIG_7